# EUROPÄISCHE PATENTANMELDUNG

(11) **EP 2 214 068 A1**
(43) Veröffentlichungstag der Anmeldung: **04.08.2010**
(21) Anmeldenummer: 10150296.1
(22) Anmeldetag: 08.01.2010
(51) Int. Cl.: G05B 19/05

(54) **Automatisierungssystem mit einem programmierbaren Matrixmodul**

(30) Priorität: 03.02.2009 DE 102009007215
(71) Anmelder: Siemens Aktiengesellschaft, 80333 München (DE)
(72) Erfinder: Rohne, Klaus, 09350 Lichtenstein (DE); Chowaniec, Michael, 09126 Chemnitz (DE); Griessbach, Gunter, 09423 Gelenau (DE)

(57) **Zusammenfassung**

Die Erfindung betrifft ein Automatisierungssystem zur Führung eines technischen Prozesses, mit einer elektronischen Verarbeitungseinheit (1), I/O-Modulen (25a-25e) zur Ein- und Ausgabe von Prozesssignalen an Betriebsmittel des technischen Prozesses, insbesondere an Sensoren und Aktoren, und Klemmenbausteinen (45a-45e) zum Anschluss der Betriebsmittel an die I/O-Mcdule (25a-25e), wobei ein programmierbares Matrixmodul (3), womit von der Verarbeitungseinheit (1) einem oder mehreren Klemmenbausteinen (45a-45e) dynamisch ein oder mehrere I/O-Mcdule (25a-25e) verschaltungstechnisch zugeordnet werden können.

## Beschreibung

Automatisierungsgeräte weisen in der Regel eine Vielzahl von Eingangs- und/oder Ausgangsmodulen auf (EM), welche abgekürzt auch als I/O-Module bezeichnet werden. Hierüber kann eine elektronische Verarbeitungseinheit im Automatisierungsgerät, meist ein programmgesteuerter Prozessor, bevorzugt Messsignale von einem technischen Prozess bzw. einer Anlage entgegennehmen und Stellsignale bzw. Steuerbefehle an Betriebsmittel des technischen Prozesses ausgeben. Zum Anschluss der I/O-Module an diese technischen Betriebsmittel, z.B. an Sensoren und Aktoren, meist über Prozessverkabelungen und Feldbusse sind eine Vielzahl von Klemmen vorhanden, welche z.B. in Klemmenbereichen zusammenfasst werden können.

Automatisierungsgeräte sind in der Regel so aufgebaut, dass eine direkte Kopplung, d.h. eine Art lineare Verbindung, von der elektronischen Verarbeitungseinheit über die I/O-Module direkt zu einem Klemmenbereich besteht. Dabei ist jedem I/O-Modul eine definierte Klemme starr zugeordnet, also mit dieser fest verdrahtet und somit funktionsmäßig linear verbunden. In einem Automatisierungsgerät sind somit die Reihenfolge, Zuordnung und Position zwischen jeder einzelnen Klemme und jedem einzelnen I/O-Modul definiert und starr festgelegt. Dies hat zur Folge, dass ein Wechsel bzw. eine freie, wahlweise Zuordnung zwischen einem I/O-Modul und einer Klemme bzw. eine Erweiterung in einer montierten Anlage nicht ohne aufwendiges Abklemmen, Umklemmen oder Umbauen möglich ist. Bei Vorliegen von eingeschränkten Platzverhältnissen können im Einzelfall derartige Umrangierungen auch unmöglich sein.

In DE 10 2004 010 003 A1 ist ein Automatisierungssystem mit Anschlüssen für Feldgeräte, mit einer Speisekomponente und einer Messkomponente für die Feldgeräte und mit einer Verbindungseinheit zur wahlfreien Verbindung der Feldgeräteanschlüsse mit den Anschlüssen der Speise- bzw. Messkomponenten offenbart. Dieses Automatisierungssystem löst bereits den Nachteil der starr zugeordneten Klemmen zu den Feldgeräten bzw. zu den I/O-Modulen. Zwar ist jetzt über ein programmierbares Matrixmodul die Verarbeitungseinheit über die I/O-Module mit den Klemmenmodulen programmtechnisch verschaltbar, aber eine optimale Ausnutzung der vorhandenen I/O-Module ist nicht gegeben.

Der Erfindung liegt die Aufgabe zu Grunde, ein zur Führung eines technischen Prozesses dienendes Automatisierungssystem der oben angegebenen Art derart weiter auszubilden, dass die vorhandenen I/O-Module optimal genutzt werden können.

Die Aufgabe wird mit einem Automatisierungssystem gemäß Anspruch 1 gelöst.

Dieses weist eine elektronische Verarbeitungseinheit, I/O-Module zur Ein- und/oder Ausgabe von Prozesssignalen an Betriebsmittel des technischen Prozesses, insbesondere an Sensoren und Aktoren, und Klemmenbausteine zum Anschluss der Betriebsmittel der Anlage an die I/O-Module auf, weiterhin ist ein programmierbares Matrixmodul vorhanden, womit von der Verarbeitungseinheit einem oder mehreren Klemmenbausteinen dynamisch ein oder mehrere I/O-Module verschaltungstechnisch zugeordnet werden können. Die Verarbeitungseinheit ist vorteilhaft derart ausgestaltet, dass einem I/O-Modul mit Hilfe des programmierbaren Matrixmoduls zeitgesteuert mehrere Klemmenbausteine verschaltungstechnisch zugeordnet werden können, wobei je einem Klemmenbaustein je ein Zeitschlitz zugeordnet wird. Mit dieser Ausgestaltung ergibt sich eine freie, programmgesteuerte Zuordnung der I/O-Module zu den Klemmenbausteinen. Die Verarbeitungseinheit könnte beispielsweise in einem Hardwarepool, welcher aus einer Anzahl von I/O-Modulen bestehen kann, nachfragen welche Hardware sich momentan im Leerlauf befindet, und diese dann mit neuen Aufgaben betreuen, wobei das erforderliche I/O-Modul an die Klemmenbausteine geschaltet wird. Vorteilhaft ist somit möglich, dass beispielsweise ein einziges I/O-Modul die Prozesssignale mehrerer Betriebsmittel an den jeweiligen Klemmenbausteinen beispielsweise in einer zeitlichen Reihenfolge gestaffelt abfragt bzw. suksessive an dieser ausgibt.

In einer vorteilhaften Ausgestaltung weist das Automatisierungssystem in dem Matrixmodul einen Multiplexer auf. Der Multiplexer ist dabei vorzugsweise als ein Selektionsschaltnetzwerk ausgestaltet, wobei bei einem zyklischen Durchlauf der Multiplexers in unterschiedlichen Zeitschlitzen quasi parallele Datenströme in serielle Datenströme umgewandelt. Die unterschiedlichen Klemmbausteine werden also demnach zeitlich hintereinander gestafelt abgetastet und ihre Ein- bzw. Ausgabewerte über das eine I/O-Modul weiter an die Verarbeitungseinheit gegeben. Als besonderer Vorteil ist hier zu nennen, dass sich mit dieser Ausgestaltung eine Automatisierungsaufgabe lösen lässt, bei welcher zuvor mehrere I/O-Module notwendig waren, und nun dieselbe Automatisierungsaufgabe mit einem einzigen I/O-Modul gelöst werden kann. Damit ergibt sich ein Kostenvorteil und ein Baugrößenvorteil des Automatisierungsgerätes, da auf komplette Baugruppen bzw. zusätzliche I/O-Module verzichtet werden kann.

Eine weitere Ausgestaltungsmöglichkeit für das Automatisierungssystem um die Flexibilität zu erhöhen ergibt sich, wenn die Verarbeitungseinheit weiterhin ausgestaltet ist, dass das I/O-Modul über einen Koppelbus zu aktivieren ist.

Dieses ermöglicht anwendungsabhängig eine dynamische, programmtechnische Rangierung der von den Betriebsmitteln eines technischen Prozesses empfangenen Prozesssignale bzw. der von der Verarbeitungseinheit ermittelten und an die Betriebsmittel ausgegebenen Prozesssignale. Das programmierbare Matrixmodul funktioniert in der Art einer frei programmierbaren Vermittlung, womit jedes I/O-Modul mit jedem Klemmenbaustein verbunden werden kann. Diese verschaltungstechnische Zuordnung kann z.B. bei der Konfiguration des Automatisierungssystems an einer technischen Anlage angelegt bzw. auch im laufenden Betrieb flexibel aktualisiert werden. Die technischen Betriebsmittel einer Anlage, besondere im Feld verteilte Sensoren und Aktoren, können somit während einer Inbetriebnahme z.B. unter Berücksichtigung eines minimalen Kabel- und Rangieraufwandes an gut zugänglichen Klemmenbausteinen angeschlossen werden. Auch die I/O-Module können uneingeschränkt angeordnet werden, z.B. unter Berücksichtigung der Topologie der jeweiligen Anlage. Damit kann die Gefahr von Bestück- und Verdrahtungsfehlern, z.B. Verwechslungen bei der Zuordnung von I/O-Modulen und Klemmenbaustein, minimiert werden.

Vorteilhafte weitere Ausführungen der Erfindung sind in den Unteransprüchen angegeben. Die Erfindung wird nachfolgend an Hand der nachfolgend kurz angeführten Figuren näher erläutert. Dabei zeigt
- Fig. 1: das Blockschaltbild eines Automatisierungssystems, welches gemäß der Erfindung mit einem zusätzlichen programmierbaren Matrixmodul zur Rangierung von Prozesssignalen ausgerüstet ist, und
- Fig. 2: einen beispielhaften Aufbau eines Schnittstellen- bausteins in einem Automatisierungsgerät, welcher einen Klemmenbereich, eine Vielzahl von I/O-Modulen und ein programmierbares Matrixmodul für Prozess- signale gemäß der Erfindung aufweist.

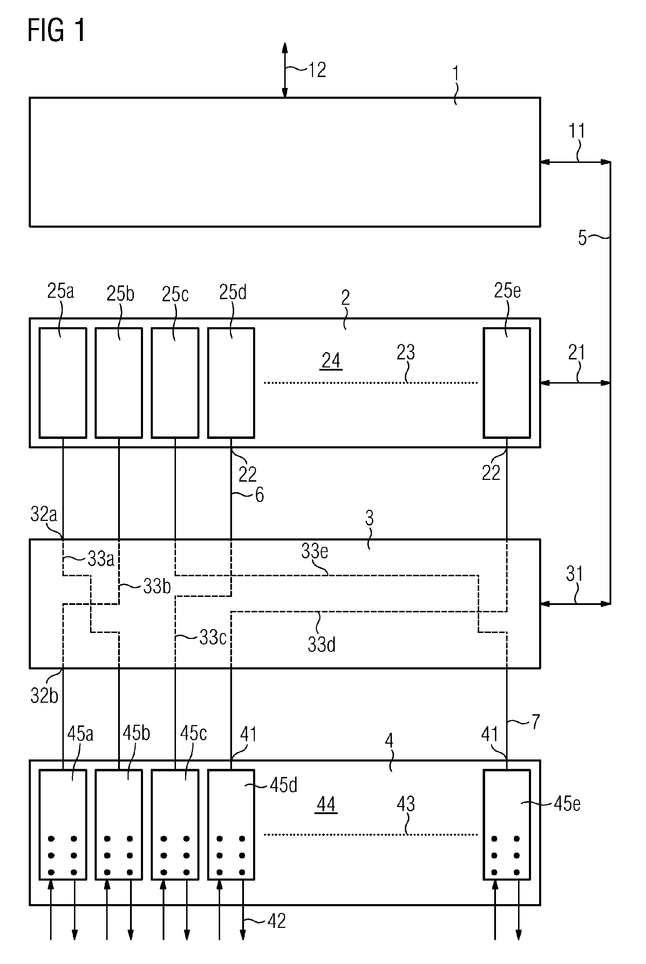

Fig. 1 zeigt in der Art eines Blockschaltbildes ein gemäß der Erfindung aufgebautes Automatisierungssystem. Dieses enthält eine elektronische Verarbeitungseinheit 1, z.B. in Form einer speicherprogrammierbaren Steuerung. Diese verarbeitet in bekannter Weise mit Hilfe von anwendungsspezifischen Programmen Signale eines technischen Prozesses und leitet hieraus Stellsignale und Befehle zur Beeinflussung des technischen Prozesses ab. Diese Ein- und Ausgangssignale werden über eine Prozessschnittstelle 42, die im Beispiel der Fig. 1 unten dargestellt ist, z.B. über Feldbusse oder auch einfachen Mehrdrahtverbindungen mit den Betriebsmitteln der technischen Anlage ausgetauscht, d.h. mit Messgebern, Sensoren, Aktoren u.s.w.. Weiterhin können an der Verarbeitungseinheit 1 über Kommunikationsschnittstellen Datenbusse, Bedien- und Beobachtungsgeräte und vieles mehr angeschlossen sein. Derartige Elemente sind aus Gründen der besseren Übersicht im Blockschaltbild der Fig. 1 nicht dargestellt.

Zwischen der elektronischen Verarbeitungseinheit 1 und der Prozessschnittstelle 42 sind im Beispiel der Fig. 1 ein Aufnahmemodul 2 mit Steckplätzen für I/O-Module z.B. in Form eines Racks, ein erfindungsgemäßes Matrixmodul 3 und ein beispielhafter Klemmenkasten 4 mit Steckplätzen für Anschlussklemmen angeordnet. Die Komponenten 1, 2, 3 und 4 sind über einen Koppelbus mit den Abgängen 5 - 7 datentechnisch an einer ersten Datenbusschnittstelle 11 der elektronischen Verarbeitungseinheit 1 angekoppelt. So wird der Koppelbus über eine erste Datenschnittstelle 21, einen Rückwandbus 23 und eine zweite Datenschnittstelle 22 durch das Aufnahmemodul 2 hindurchgeschleift. Das Aufnahmemodul 2 stellt Steckplätze für I/O-Modulen bereit, von denen im Beispiel der Fig. 1 die Steckplätze 24 unbelegt und die übrigen Steckplätze mit I/O-Modulen 25a - 25e belegt sind. Bei den I/O-Modulen kann es sich vorzugsweise um so genannte intelligente Schnittstellenbausteine handeln. Module dieser Art verfügen über Verarbeitungsmittel, mit deren Rechenleistung eine Vor- bzw. Nachverarbeitung von Ein- und Ausgangssignalen des technischen Prozesses und damit eine Entlastung der elektronischen Verarbeitungseinheit 1 möglich ist. Beispielhaft für Module dieser Art können Ein- und Ausgabebaugruppen für binäre bzw. analoge Prozesssignale genannt werden.

Diese Signale am Ausgang eines jeden I/O Moduls sind entweder für ein oder mehrere Betriebsmittel des technischen Prozesses bestimmt, oder werden von einem oder mehreren Betriebsmitteln bereitgestellt. Es ist somit notwendig, die Ausgänge der I/O-Module im Aufnahmemodul 2 den zu den jeweiligen Betriebsmitteln führenden Kabelverbindungen des technischen Prozesses zuzuordnen. Diese Kabelverbindungen sind im Beispiel der Fig. 1 an der Prozessschnittstelle 42 an Klemmenbausteinen aufgelegt, welche in einem Klemmenkasten 4 zusammengeführt sind. Auch hier wird der Koppelbus am Abgang 7 datentechnisch über eine Datenbusschnittstelle 41 in den Klemmenkasten 4 eingeschleift und über einen Rückwandbus 43 hindurchgeschleift. In diesem Fall stellt der Klemmenkasten 4 Steckplätze für Klemmenbausteine bereit, wobei im Beispiel der Fig. 1 die Steckplätze 44 unbelegt und die übrigen Steckplätze mit Klemmenbausteinen 45a - 45e belegt sind. Die Klemmenbausteine können dabei mit unterschiedlicher Kabelanschlusstechnik ausgestattet sein, z.B. mit Schraubkontakten oder Federzugkontakten.

Gemäß der Fig. 1 ist zwischen Aufnahmemodul 2 und Klemmenkasten 4 ein Matrixmodul 3 angeordnet. Dieses ist beispielhaft über Datenschnittstellen 32a, 32b an die Abgänge des Koppelbusses 6, 7 angeschlossen. Weiterhin ist es über eine Datenschnittstelle 31 an den Koppelbus 5 angeschlossen. Hierüber kann das Matrixmodul 3 programmtechnisch durch die Verarbeitungseinheit 1 so parametriert werden, dass einem oder mehreren Klemmenbausteinen 45a - 45e dynamisch ein oder mehrere I/O-Module 25a - 25e verschaltungstechnisch zugeordnet werden. In Fig. 1 sind derartige programmtechnische Verknüpfungen beispielhaft dargestellt, wobei Programmpfad 33a das Modul 25a mit Klemme 45b, Programmpfad 33b das Modul 25b mit Klemme 45a, Programmpfad 33c das Modul 25d mit Klemme 45c, Programmpfad 33d das Modul 25e mit Klemme 45d und Programmpfad 33e das Modul 25c mit Klemme 45e verknüpft. Die in Fig. 1 gezeigten programmtechnischen Verknüpfungen sind nur beispielhaft und können u.U. auch im laufenden Betrieb durch die Verarbeitungseinheit 1 dynamisch angepasst werden.

Wird z.B. der Verarbeitungseinheit der Ausfall eines I/O-Moduls programmtechnisch gemeldet, so kann diese dem zugeordneten Klemmenbaustein, der auf Grund des Ausfalls keine Prozesssignale mehr empfangen oder an die Verarbeitungseinheit 1 übertragen kann, mit Hilfe des programmierbaren Matrixmoduls dynamisch ein anderes I/O-Modul verschaltungstechnisch zuordnen. Auf diese Weise kann der Weiterbetrieb des Automatisierungssystems ermöglicht werden. So können z.B. im Rahmen einer redundanten Anlageninstrumentierung mehr I/O-Module im Aufnahmemodul 2 gesteckt sein, als für einen normalen Betrieb benötigt werden. In diesem Falle würde die Verarbeitungseinheit den betroffenen Klemmenbaustein dynamisch einem bislang nicht genutzten I/O-Modul verschaltungstechnisch zuordnen.

Je nach Ausführung des Automatisierungssystems kann es möglich sein, dass die Verarbeitungseinheit auch den Ausfall eines Betriebsmittels des technischen Prozesses, z.B. eines Sensors oder Aktors, detektieren kann. In einem solchen Fall ist es mit der Erfindung möglich, dass die Verarbeitungseinheit dem betroffenen I/O-Modul, welches auf Grund des Ausfalls keine Prozesssignale mehr an den technischen Prozess übergeben oder von diesem entgegen nehmen kann, mit Hilfe des programmierbaren Matrixmoduls dynamisch einen anderen Klemmenbaustein verschaltungstechnisch zuordnet. Ist dieser mit zumindest eingeschränkt funktionsfähigen Betriebsmitteln der Anlage verbunden, so kann u.U unter Verwendung von Ersatzprozesssignalen deren Betrieb aufrechterhalten oder zumindest eine geordnete Stilllegung herbeigeführt werden. Ist im Rahmen eines Redundanzkonzepts der technische Prozess mit Reservebetriebsmitteln ausgestattet, z.B. mit Ersatzpumpen oder Notantrieben, so wird vorteilhaft dann von der Verarbeitungseinheit dem betroffenen I/O Modul dynamisch ein Klemmenbaustein verschaltungstechnisch zuordnet, an dem ein redundantes Betriebsmittel des technischen Anlage angeschlossen ist.

Die Erfindung ermöglicht es sogar, dass die Verarbeitungseinheit einem I/O-Modul mit Hilfe des programmierbaren Matrixmoduls u.U. dynamisch mehrere Klemmenbausteine verschaltungstechnisch zuordnet. In diesem Falle aktiviert das I/O-Modul diese Klemmenbausteine, insbesondere zur Ein- und Ausgabe von Prozesssignalen, vorteilhaft zyklisch. Ein solcher Fall kann in der Praxis besonders dann auftreten, wenn an Klemmenbausteinen Betriebsmittel des technischen Prozesses angeschlossen sind, deren Zustände im Vergleich zur Verarbeitungsgeschwindigkeit des I/O-Moduls nur langsam veränderlich sind. Betriebsmittel dieser Art können z.B. Heizungen und die daran angeschlossenen Temperaturmessgeber sein. Es ist dann möglich, dass ein einziges I/O-Modul die Prozesssignale mehrerer Betriebsmittel an den jeweiligen Klemmbausteinen z.B. in einer zeitlichen Reihenfolge gestaffelt abfragt bzw. sukzessive an diese ausgibt. Das Matrixmodul weist dann zusätzlich die Funktion eines Multiplexers auf.

Andererseits ist es mit der Erfindung auch möglich, dass die Verarbeitungseinheit mit Hilfe des programmierbaren Matrixmoduls mehreren I/O-Modulen dynamisch einen einzigen Klemmenbaustein verschaltungstechnisch zuordnet. Auch in diesem Falle aktivieren die I/O-Module diesen Klemmenbaustein, insbesondere zur Ein- und Ausgabe von Prozesssignalen, zyklisch. Ein solcher Fall kann in der Praxis besonders dann auftreten, wenn an einem Klemmenbaustein ein Betriebsmittel des technischen Prozesses angeschlossen ist, dessen Zustand im Vergleich zur Verarbeitungsgeschwindigkeit der eingesetzten I/O-Module schnell veränderlich ist. Ein Betriebsmittel dieser Art kann z.B. ein drehzahlgeregelter Antrieb und ein daran angeschlossener Drehzahlmessgeber sein. Es ist dann möglich, dass mehrere I/O-Module das schnell veränderliche Prozesssignal des einzigen Betriebsmittels von dem jeweiligen Klemmbaustein z.B. in einer zeitlichen Reihenfolge mittels eines Zeitschlitzverfahrens abfragen bzw. an dieses ausgeben. Auch in diesem Falle weist das Matrixmodul dann zusätzlich die Funktion eines Multiplexers auf.

Bei einer vorteilhaften, weiteren Ausführungsform detektiert die Verarbeitungseinheit, insbesondere bei der Inbetriebnahme, dynamisch in einem ersten Suchlauf die vorhandenen I/O-Module und in einem zweiten Suchlauf die an den Klemmenbausteinen angeschlossenen Betriebsmittel des technischen Prozesses. Vorzugsweise werden dabei die I/O-Module und Betriebsmittel nach Typ und Steckplatz detektiert. Damit sind quasi die aktivierbaren Zeilen und Spalten im programmierbaren Matrixmodul ermittelt. Die Verarbeitungseinheit kann nun dynamisch die verschaltungstechnische Zuordnung von einem oder mehreren Klemmenbausteinen mit einem oder mehreren I/O-Modulen insbesondere abhängig von einem anwendungsabhängigen Steuerungsprogramm automatisch vornehmen. Die Verarbeitungseinheit kann diesen Suchlauf bevorzugt bei einer Erstinbetriebnahme, aber auch zu einem späteren Zeitpunkt bzw. zum wiederholten Male durchführen. Mit dem ersten Suchlauf erkennt also das Automatisierungssystem zunächst die installierten I/O-Module nach Typ und Anordnung, d.h. die Belegung der Steckplätze des Aufnahmemoduls 2 in Fig. 1 mit einem bestimmten I/O-Modul. In einem weiteren Suchlauf werden dann die an den jeweiligen Klemmenbausteinen im Klemmenkasten 4 angeschlossenen Betriebsmittel des technischen Prozesses, insbesondere die Sensoren und Aktoren, detektiert.

Die Erfindung erleichtert den Einsatz von dynamischer Programmierung, indem eine quasi-neuronale Vernetzung von I/O-Modulen mit den Klemmenbausteinen erzielbar ist. Dies ermöglicht eine mehr objektorientierte Ausführung von Steuerungsprogrammen, so dass wichtige Leistungsmerkmale eines Automatisierungssystems, wie z.B. Redundanz, Verarbeitungsgeschwindigkeit, Genauigkeit, besser skalierbar sind als bisher. Die freie Zuordnung der I/O-Module zu den Prozessklemmen mit Hilfe des programmgesteuerten Matrixmoduls ermöglicht auch die Implementierung von neuen Funktionen in einer Steuerung. So kann die Verarbeitungseineinheit z.B. im Hardwarepool nachfragen, welche I/O-Module sich temporär im Leerlauf befinden. Diese können dann mit neuen bzw. alternativen Steuerungs- bzw. Messaufgaben eingelastet und mit dem Matrixmodul zu den erforderlichen Klemmen durchgeschaltet werden. Diese dynamischen Zuordnungen können auch stochastisch vorausschauend bzw. selbst optimierend erfolgen.

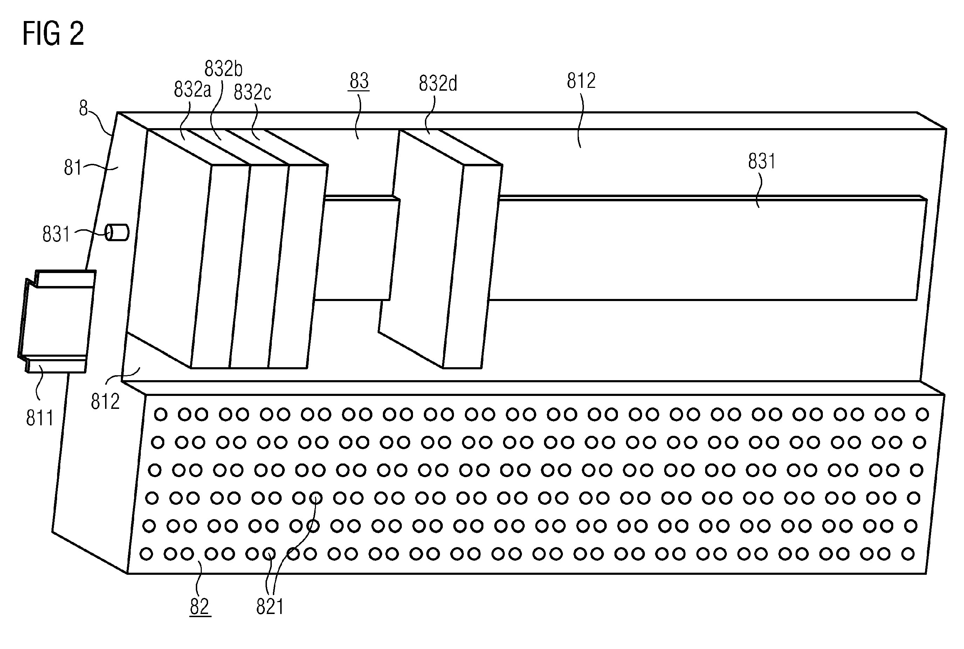

Fig. 2 zeigt einen beispielhaften Aufbau eines separaten Schnittstellenbausteins 8 für ein Automatisierungssystem. Das Gehäuse 81 des Schnittstellenbausteins ist auf der Rückseite 811 mit Eingriffsmitteln zur Halterung einer Hutschiene ausgestattet. Die Vorderseite des Gehäuses 81 ist als Anschlussbereich 812 mit einer Schnittstellenebene 83 in einem oberen Bereich und einer Verdrahtungsebene 82 in einem unteren Bereich ausgebildet. Die Verdrahtungsebene 82 weist beispielhaft eine Vielzahl von Verdrahtungsklemmen 821 auf. An diese können von einer technischen Anlage herangeführte Prozesssignalleitungen aufgelegt werden. Im Beispiel der Fig. 2 sind dabei jeweils zwei nebeneinander liegende Reihen von jeweils 6 vertikal übereinander angeordneten Anschlüssen zu einem Klemmenbaustein gruppiert. Im Beispiel der Fig. 2 sind zudem die drei am linken Ende der Schnittstellenebene 83 befindlichen Steckplätze mit jeweils einem I/O Modul 832a, 832b, 832c bestückt, während die nach rechts folgenden drei weiteren Steckplätze unbelegt sind. Es schließt sich noch ein weiteres I/O Modul 832d an. Die I/O-Module sind datentechnisch untereinander über den Rückwandbus 831 gekoppelt. Dieser bildet auch die Verbindung zu einer nicht dargestellten Verarbeitungseinheit. Die Zuordnung der I/O-Module 832a - 832d zu ausgewählten Klemmenbausteinen erfolgt gemäß der vorliegenden Erfindung mit Hilfe eines programmierbaren Matrixmoduls. Dieses ist im Gehäuse 81 integriert und auf diese Weise über den Rückwandbus 831 datentechnisch mit den I/O-Modulen 832a - 832d, einer Verarbeitungseinheit und den Verdrahtungsklemmen 821 verbunden. Wie oben ausführlich erläutert wurde, kann mit dem Matrixmodul eine freie, dynamische Zuordnung der I/O-Module 832a - 832d zu beliebigen Klemmenbausteinen in der Verdrahtungsebene 82 vorgenommen werden. Es ist somit möglich, uneingeschränkt Prozesssignalkabel in einer anschlusstechnisch günstigen Weise an nahe liegende Klemmenbausteine anzuschließen, oder den Anschluss auch unter Berücksichtigung von anderen Ordnungskriterien vorzunehmen.

## Patentansprüche

1. Automatisierungssystem zur Führung eines technischen Prozesses, mit
- einer elektronischen Verarbeitungseinheit (1),
- zumindest einem I/O-Module (25a-25e) zur Ein- und Ausgabe von Prozesssignalen an Betriebsmittel des technischen Prozesses,
- zumindest einem Klemmenbaustein (45a-45e) zum Anschluss der Betriebsmittel an die I/O-Module (25a-25e),
- ein programmierbares Matrixmodul (3), womit von der Verarbeitungseinheit (1) einem oder mehreren Klemmenbausteinen (45a-45e) dynamisch ein oder mehrere I/O-Module (25a-25e) verschaltungstechnisch zugeordnet werden können,
**dadurch gekennzeichnet, dass**
die Verarbeitungseinheit (1) ausgestaltet ist einem I/O-Modul (25a-25e) mit Hilfe des programmierbaren Matrixmoduls (3) zeitgesteuert mehrere Klemmenbausteine (45a-45e) verschaltungstechnisch zuzuordnen, wobei je einem Klemmenbaustein ein je ein Zeitschlitz zugeordnet wird.

2. Automatisierungssystem nach Anspruch 1, wobei das Matrixmodul (3) einen Multiplexer aufweist.

3. Automatisierungssystem nach Anspruch 1 oder 2, wobei die Verarbeitungseinheit (1) weiterhin ausgestaltet das I/O-Modul (25a-25e) über einen Koppelbus (5) zu aktivieren.

4. Automatisierungssystem nach einem der Ansprüche 1 bis 3, ist die Verarbeitungseinheit (1) ausgestaltete ist einen Ausfall eines I/O-Moduls (25a-25e) zu detektieren und dem zugeordneten Klemmenbaustein (45a-45e) mit Hilfe des programmierbaren Matrixmoduls (3) dynamisch ein anderes I/O-Modul (25a-25e) verschaltungstechnisch zuzuordnen.

5. Automatisierungssystem nach einem der Ansprüche 1 bis 4, wobei die Verarbeitungseinheit (1) dazu ausgestaltet ist die I/O-Module (25a-25e) zu Überwachen und einen Auslastungsgrad zu ermitteln und gegebenenfalls verschaltungstechnisch temporär einen anderen Klemmenbaustein zuzuordnen.

6. Automatisierungssystem nach einem der Ansprüche 1 bis 5, wobei die Verarbeitungseinheit (1) bei einer Detektion eines Ausfalls eines Betriebsmittels des technischen Prozesses dem zugeordneten I/O-Modul (25a-25e) mit Hilfe des programmierbaren Matrixmoduls (3) dynamisch einen anderen Klemmenbaustein (45a-45e) verschaltungstechnisch zuordnet.

7. Automatisierungssystem nach einem der Ansprüche 1 bis 6, wobei die Verarbeitungseinheit (1) dynamisch einen Klemmenbaustein (45a-45e) verschaltungstechnisch zuordnet, an dem ein redundantes Betriebsmittel des technischen Prozesses angeschlossen ist.

8. Automatisierungssystem nach einem der Ansprüche 1 bis 7, wobei die Verarbeitungseinheit (1) einem I/O-Modul (25a-25e) dynamisch mehrere Klemmenbausteine (45a-45e) verschaltungstechnisch zuordnet, an denen Betriebsmittel des technischen Prozesses mit im Vergleich zur Verarbeitungsgeschwindigkeit des I/O-Moduls langsam veränderlichen Zuständen angeschlossen sind.

9. Automatisierungssystem nach Anspruch 1, wobei die Verarbeitungseinheit (1) ein Suchlaufmittel aufweist, welches ausgestaltet ist in einem ersten Suchlauf vorhandene I/O-Module (25a-25e), und in einem zweiten Suchlauf an den Klemmenbausteinen (45a-45e) angeschlossene Betriebsmittel des technischen Prozesses dynamisch zu erkennen.
